# EUROPÄISCHE PATENTSCHRIFT

(11) **EP 3 740 384 B1**
(45) Veröffentlichungstag und Bekanntmachung des Hinweises auf die Patenterteilung: **05.10.2022**
(21) Anmeldenummer: 18825869.3
(22) Anmeldetag: 03.12.2018
(51) Int. Cl.: B60C 9/00, B29C 70/20, B60C 9/04, B60C 9/20, B60C 9/22

(54) **VERSTÄRKUNGSLAGE FÜR GEGENSTÄNDE AUS ELASTOMEREM MATERIAL UND FAHRZEUGLUFTREIFEN**
REINFORCING PLY FOR ARTICLES CONSISTING OF AN ELASTOMERIC MATERIAL, AND VEHICLE PNEUMATIC TYRES
NAPPE DE RENFORCEMENT POUR DES OBJETS COMPOSÉS D'UN MATÉRIAU ÉLASTOMÈRE ET PNEUMATIQUE DE VÉHICULE

(30) Priorität: 16.01.2018 DE 102018200634
(43) Veröffentlichungstag der Anmeldung: 25.11.2020
(73) Patentinhaber: Continental Reifen Deutschland GmbH, 30165 Hannover (DE)
(72) Erfinder: KRAMER, Thomas, 30419 Hannover (DE)
(74) Vertreter: Continental Corporation
(86) Internationale Anmeldenummer: PCT/EP2018/083256
(87) Internationale Veröffentlichungsnummer: WO 2019/141423

(56) Entgegenhaltungen:
- EP-A2- 0 374 356
- EP-B1- 0 908 329
- WO-A1-2011/082844
- WO-A1-2017/211546
- DE-T2- 3 877 117

## Beschreibung

Die Erfindung betrifft eine gummierte Verstärkungslage für Gegenstände aus elastomerem Material, vorzugsweise für Fahrzeugreifen, wobei die Verstärkungslage eine Vielzahl an parallelen und beabstandet zueinander angeordneten textilen Festigkeitsträgern aufweist, wobei jeder textile Festigkeitsträger aus wenigstens einem verdrehten Multifilamentgarn besteht und wobei der textile Festigkeitsträger nicht aus dem Material Rayon besteht. Die Erfindung betrifft ferner einen Fahrzeugluftreifen.

Verstärkungslagen für Gegenstände aus elastomerem Material wie beispielsweise technische Gummiprodukte und Fahrzeug(luft)reifen haben größte Bedeutung und sind dem Fachmann im Allgemeinen bekannt. Die Verstärkungslagen weisen eine Vielzahl an verstärkenden, fadenförmigen Elementen, den sogenannten Festigkeitsträgern, auf. Diese sind vollständig in elastomerem Material eingebettet. Die Festigkeitsträger dieser Verstärkungslagen weisen beispielsweise die Form von Geweben oder kalandrierten, endlos gespulten Festigkeitsträgern auf.

Die gummierten Verstärkungslagen geeigneter Größe und Ausbildung werden mit weiteren Bauteilen zusammengefügt, um ein technisches Gummiprodukt oder einen Fahrzeugluftreifen zu bilden. Dabei verstärken die gummierten Verstärkungslagen das betreffende Produkt.

Aus der EP 0 908 329 B1 ist eine Verstärkungslage mit Textil-Korden aus Multifilamentgarnen aus PET, PEN und Aramid bekannt geworden. Die PEN-Korde sind aufgrund des verwendeten Garntiters und ihrer Konstruktion vergleichsweise dünn ausgelegt, so dass die gummierte Verstärkungslage eine vergleichsweise geringe Lagendicke aufweist. Dieses hat einerseits den Vorteil, dass weniger Kautschukmaterial zum Gummieren dieser Festigkeitsträger eingesetzt werden muss, wodurch Materialkosten eingespart werden. Andererseits hat eine dünne gummierte Verstärkungslage im Produkt, beispielsweise im Fahrzeugreifen, den Vorteil, dass das Gewicht des Reifens verringert ist sowie eine geringere Hysterese bewirkt, was sich positiv auf den Rollwiderstand des Reifens auswirkt.

Jedoch ist neben der Gewichtsverringerung und der geringeren Hysterese durch eine dünne Lagendicke ebenfalls die Festigkeit dieser Verstärkungslage wesentlich, um die im Reifen auftretenden Kräfte hinreichend aufnehmen zu können.

Es ist daher die Aufgabe der Erfindung, eine Verstärkungslage für Gegenstände aus elastomerem Material bereitzustellen, welche vergleichsweise dünn gestaltet ist und welche jedoch eine ausreichende Festigkeit für die im Reifen auftretenden Kräfte aufweist. Weiterhin ist es die Aufgabe der Erfindung, einen Fahrzeugluftreifen bereitzustellen, welcher bei guter struktureller Haltbarkeit rollwiderstandsoptimiert ist.

Die Aufgabe wird in Bezug auf die Verstärkungslage dadurch gelöst, dass die Verstärkungslage folgender Bedingung genügt:
(D² / E₀) in mm entspricht einem Wert in einem Bereich von 0,31 mm bis 0,38 mm und dass die Verstärkungslage eine Festigkeit von 10 kN/dm < x < 25 kN/dm aufweist,
wobei D der Durchmesser des textilen Festigkeitsträgers in mm ist und in einem Bereich von 0,38 mm bis 0,52 mm liegt und
wobei Eo = 100/epdm ist und die Festigkeit der Verstärkungslage die Bruchkraft der Verstärkungslage in kN pro dm meint, welche sich aus der Bruchkraft des einzelnen Festigkeitsträgers multipliziert mit der Anzahl der Festigkeitsträger pro dm dieser Verstärkungslage errechnet, wobei die Bruchkraft nach ASTM D885M ermittelt wird.

Es ist eine Verstärkungslage geschaffen, welche Festigkeitsträger mit vergleichsweise geringen Durchmessern aufweist. Die Gummierung der Verstärkungslage, insbesondere deren Dicke, ist in einer für den Fachmann üblichen Weise ausgeführt, wodurch eine vergleichsweise dünne Verstärkungslage zur Verfügung gestellt ist. Diese Verstärkungslage weist eine Festigkeit von 10 kN/dm < x < 25 kN/dm auf, welches eine ausreichende Festigkeit für Verstärkungslagen mit textilen Festigkeitsträgern, insbesondere für PKW-Reifen, ist.

Festigkeitsträger aus dem Material Rayon sind explizit von der Erfindung ausgenommen. "epdm" bedeutet ends per decimeter und beschreibt die Festigkeitsträgerdichte in der Verstärkungslage.

Der Ausdruck "Festigkeit der Verstärkungslage" meint die Bruchkraft der Verstärkungslage in kN pro dm (Dezimeter), welche sich aus der Bruchkraft des einzelnen Festigkeitsträgers multipliziert mit der Anzahl der Festigkeitsträger pro dm dieser Verstärkungslage errechnet, wobei die Bruchkraft nach ASTM D885M ermittelt wird.

Bei der Erfindung genügt die Verstärkungslage folgender Bedingung:
(D² / E₀) in mm entspricht einem Wert in einem Bereich von 0,31 mm bis 0,38 mm.

Mit diesem Wertebereich ist ein optimierter Kompromiss zwischen Lagenstärke und Festigkeit erreicht. Zudem sind die Festigkeitsträger in der Verstärkungslage nicht zu dicht gepackt, so dass noch ausreichend Gummi in der Lage ist, um eine Kraftübertragung zwischen den Korden zu gewährleisten.

In einer bevorzugten Ausführung der Erfindung weist der Festigkeitsträger einen Durchmesser in einem Bereich von 0,38 mm bis 0,45 mm, bevorzugt in einem Bereich von 0,42 mm bis 0,45 mm auf. Mit diesem Wertebereich ist einen optimierter Kompromiss zwischen Lagenstärke und Festigkeit erreicht.

Vorteilhaft für die Reifenperformance ist es, wenn die Verstärkungslage eine Festigkeit von 11 kN/dm < x < 14 kN/dm aufweist. Dieses stellt die beste Lösung im Zielkonflikt Dicke der Verstärkungslage zu deren Festigkeit dar.

In einer bevorzugten Ausführung der Erfindung ist der Festigkeitsträger ein aus zwei miteinander verdrehten Multifilamentgarnen bestehender Kord und die Festigkeitsträger sind in einer Dichte in einem Bereich von 150 epdm bis 220 epdm, vorzugsweise in einem Bereich von 170 epdm bis 180 epdm in dieser Verstärkungslage angeordnet. Die vorgenannte Dichte ist ein optimierter Kompromiss zwischen Haltbarkeit der Verstärkungslage und Kraftübertragung, für die ein bestimmtes Gummivolumen zwischen den Festigkeitsträgern vorhanden sein muss, auf der einen Seite sowie der Festigkeit und der Reifenperformance Haltbarkeit auf der anderen Seite, für die die Festigkeitsträger nicht zu weit in der Verstärkungslage auseinander liegen dürfen.

Zweckmäßig ist es, wenn die Festigkeitsträger aus dem Material PET, PEN oder aus aliphatischen Polyamiden, wie beispielsweise Nylon PA 66, PA46, PA6 oder aus aromatischen Polyamiden, wie beispielsweise p-Aramid, m-Aramid, PBO oder aus Kombinationen der vorgenannten Materialien bestehen. Kombinationen aus den vorgenannten Materialien bilden sogenannte Hybrid-Festigkeitsträger, bei denen ein Garn aus einem ersten Material und ein oder mehrere weitere(s) Garn(e) aus einem vom ersten Material verschiedenen zweiten bzw. weiteren Material besteht.

In einer bevorzugten Ausführung der Erfindung weist der Kord die Konstruktion 550dtex x2 mit einem Durchmesser von 0,45 mm auf, wobei beide Garne aus PET bestehen und in einer Dichte von 175 epdm in dieser Verstärkungslage angeordnet sind und wobei die Verstärkungslage eine Festigkeit von etwa 11,38 kN/dm aufweist.

In Bezug auf den Fahrzeugluftreifen wird die Erfindung dadurch gelöst, dass dieser mindestens eine vorbeschriebene Verstärkungslage aufweist.

Diese Verstärkungslage ist eine Karkasse und/oder eine Gürtelbandage und/oder ein Wulstverstärker ist. Bevorzugt ist diese Verstärkungslage eine Karkasse eines PKW-Luftreifens.

In einer bestimmten Ausführung der Erfindung weist der Fahrzeugluftreifen zusätzlich zur vorbeschriebenen Verstärkungslage, welche vorzugsweise eine Karkasse ist, eine Gürtellage aus gummierten Festigkeitsträgern auf, welche der nachfolgenden Bedingung genügt:
(D² / E₀) in mm entspricht einem Wert in einem Bereich von 0,07 mm bis 0,43 mm und
dass die Verstärkungslage eine Festigkeit von 16,5 kN/dm <X< 55 kN/dm aufweist, wobei D der Durchmesser des Festigkeitsträgers in mm ist und wobei Eo = 100/epdm ist.

Zweckmäßig ist es, wenn die Summe der Festigkeiten aus der Verstärkungslage mit textilen Festigkeitsträgern und der Gürtellage ≥ 40 kN/dm ist. Es ist eine ausreichende Gesamtfestigkeit gewährleistet.

Vorzugsweise besteht der Festigkeitsträger der Gürtellage aus wenigstens einem Stahlfilament, welches einen Durchmesser in einem Bereich von 0,26 mm bis 0,35 mm aufweist. Diese dünnen Durchmesser sind vorteilhaft für einen optimierten Rollwiderstand.

In einer bevorzugten Ausführung der Erfindung weist der Festigkeitsträger die Konstruktion 1x0,30 mm oder 2x0,30 mm auf und ist in einer Dichte in einem Bereich von 80 bis 120 epdm in der Gürtellage angeordnet. Die vorgenannte Dichte ist ein optimierter Kompromiss zwischen Haltbarkeit der Verstärkungslage und Kraftübertragung, für die ein bestimmtes Gummivolumen zwischen den Festigkeitsträgern vorhanden sein muss, auf der einen Seite sowie der Festigkeit und der Reifenperformance Haltbarkeit auf der anderen Seite, für die die Festigkeitsträger nicht zu weit in der Verstärkungslage auseinander liegen dürfen.

Bevorzugt ist ein Stahlmonofilament der Konstruktion 1x0,30 mm mit einer Dichte von 110 epdm in der Gürtellage angeordnet, wobei diese Gütellage eine Festigkeit von etwa 24 kN/dm aufweist.

In einer anderen bevorzugten Ausführung ist ein Stahlkord der Konstruktion 2x0,30 mm mit einer Dichte von 80 epdm in der Gürtellage angeordnet ist, wobei diese Gütellage eine Festigkeit von etwa 35 kN/dm aufweist.

Die Erfindung wird nachfolgend anhand einer Figur, welche ein schematisches Ausführungsbeispiel der Erfindung darstellt, näher erläutert.

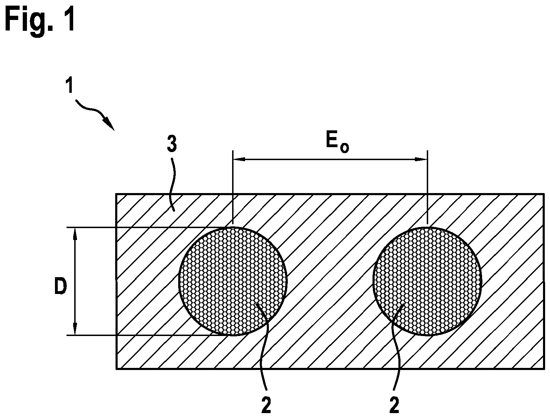

Die Fig. 1 zeigt einen Ausschnitt aus dem Querschnitt einer erfindungsgemäßen Verstärkungslage für PKW-Fahrzeugluftreifen.

Die Verstärkungslage 1 ist eine Karkasslage. Die Verstärkungslage 1 weist eine Vielzahl an parallelen und beabstandet zueinander angeordneten textilen Festigkeitsträgern 2 auf, welche in eine Kautschukmatrix 3 eingebettet sind. Von den Festigkeitsträgern 2 sind in dem Ausschnitt der Fig. 1 zwei Festigkeitsträger 2 dargestellt. Jeder textile Festigkeitsträger 2 ist ein aus zwei miteinander verdrehten Multifilamentgarnen bestehender Kord 2 der Konstruktion 550 dtex x 2. Die Multifilamentgarne bestehen aus dem Material PET. Somit sind zwei PET-Multifilamentgarne zu einem Kord 2 verdreht. Jedes PET-Multifilamentgarn ist mit einem Twist von 590 gleichsinnig verdreht, während die Endverdrehung ebenfalls mit einem Twist von 590, aber gegensinnig ist. Der Durchmesser des Kordes D beträgt 0,45 mm und der Kord 2 ist mit 175 epdm in der Verstärkungslage 1 angeordnet. (D² / E₀) in mm entspricht 0,354 mm und somit genügt die Verstärkunglage 1 folgender Bedingung:
(D² / E₀) in mm entspricht einem Wert in einem Bereich von 0,31 mm bis 0,38 mm,
wobei D der Durchmesser des textilen Festigkeitsträgers in mm und
wobei Eo = 100/epdm ist.

Die Verstärkungslage weist eine Festigkeit von etwa 11,38 kN/dm auf.

### Bezugszeichenliste

- .1: Verstärkungslage
- 2: Textiler Festigkeitsträger / Kord
- 3: Kautschukmatrix
- D: Durchmesser des Kordes
- Eo: Entfernung zwischen den Mittelpunkten zweier benachbarter Korde im Querschnitt

## Patentansprüche

1. Gummierte Verstärkungslage (1) für Gegenstände aus elastomerem Material, vorzugsweise für Fahrzeugreifen, wobei die Verstärkungslage (1) eine Festigkeit von 10 kN/dm < x < 25 kN/dm aufweist und eine Vielzahl an parallelen und beabstandet zueinander angeordneten textilen Festigkeitsträgern (2) aufweist, wobei jeder textile Festigkeitsträger (2) aus wenigstens einem verdrehten Multifilamentgarn besteht und wobei der textile Festigkeitsträger (2) nicht aus dem Material Rayon besteht,
**dadurch gekennzeichnet,**
**dass** die Verstärkungslage (1) folgender Bedingung genügt:
(D² / E₀) in mm entspricht einem Wert in einem Bereich von 0,31 mm bis 0,38 mm,
wobei D der Durchmesser des textilen Festigkeitsträgers (2) in mm ist und
in einem Bereich von 0,38 mm bis 0,52 mm liegt und
wobei Eo = 100/epdm ist und die Festigkeit der Verstärkungslage die Bruchkraft der Verstärkungslage in kN pro dm meint, welche sich aus der Bruchkraft des einzelnen Festigkeitsträgers multipliziert mit der Anzahl der Festigkeitsträger pro dm dieser Verstärkungslage errechnet, wobei die Bruchkraft nach ASTM D885M ermittelt wird.

2. Verstärkungslage (1) nach Anspruch 1, **dadurch gekennzeichnet, dass** der Festigkeitsträger (2) einen Durchmesser (D) in einem Bereich von 0,38 mm bis 0,45 mm, bevorzugt in einem Bereich von 0,42 mm bis 0,45 mm aufweist.

3. Verstärkungslage (1) nach einem oder mehreren der vorangehenden Ansprüche, **dadurch gekennzeichnet, dass** die die Verstärkungslage (1) eine Festigkeit von 11 kN/dm < x < 14 kN/dm aufweist.

4. Verstärkungslage (1) nach einem oder mehreren der vorangehenden Ansprüche, **dadurch gekennzeichnet, dass** der Festigkeitsträger (2) ein aus zwei miteinander verdrehten Multifilamentgarnen bestehender Kord (2) ist und dass die Festigkeitsträger (2) in einer Dichte in einem Bereich von 150 epdm bis 220 epdm, vorzugsweise in einem Bereich von 170 epdm bis 180 epdm in dieser Verstärkungslage (1) angeordnet sind.

5. Verstärkungslage (1) nach einem oder mehreren der vorangehenden Ansprüche, **dadurch gekennzeichnet, dass** die Festigkeitsträger (2) aus dem Material PET, PEN oder aus aliphatischen Polyamiden, wie beispielsweise Nylon PA 66, PA46, PA6 oder aus aromatischen Polyamiden, wie beispielsweise p-Aramid, m-Aramid, PBO oder aus Kombinationen der vorgenannten Materialien bestehen.

6. Verstärkungslage (1) nach einem oder mehreren der vorangehenden Ansprüche, **dadurch gekennzeichnet, dass** der Kord (2) die Konstruktion 550dtex x2 mit einem Durchmesser (D) von 0,45 mm aufweist, wobei beide Garne aus PET bestehen und in einer Dichte von 175 epdm in dieser Verstärkungslage (1) angeordnet sind und dass die Verstärkungslage (1) eine Festigkeit von etwa 11,38 kN/dm aufweist.

7. Fahrzeugluftreifen, welcher mindestens eine Verstärkungslage (1) nach einem oder nach mehreren der vorangehenden Ansprüche aufweist.

8. Fahrzeugluftreifen nach Anspruch 7, **dadurch gekennzeichnet, dass** die Verstärkungslage (1) eine Karkasse und/oder eine Gürtelbandage und/oder ein Wulstverstärker ist.

9. Fahrzeugluftreifen nach Anspruch 8, **dadurch gekennzeichnet, dass** dieser zusätzlich zur Verstärkungslage (1) eine Gürtellage aus gummierten Festigkeitsträgern aufweist, welche der nachfolgenden Bedingung genügt: (D² / E₀) in mm entspricht einem Wert in einem Bereich von 0,07 mm bis 0,43 mm und dass die Verstärkungslage eine Festigkeit von 16,5 kN/dm <X< 55 kN/dm aufweist, wobei D der Durchmesser des Festigkeitsträgers in mm ist und wobei Eo = 100/epdm ist.

10. Fahrzeugluftreifen nach Anspruch 9, **dadurch gekennzeichnet, dass** die Summe der Festigkeiten aus der Verstärkungslage (1) mit textilen Festigkeitsträgern und der Gürtellage ≥ 40 kN/dm ist.

11. Fahrzeugluftreifen nach Anspruch 9 oder 10, **dadurch gekennzeichnet, dass** der Festigkeitsträger der Gürtellage aus wenigstens einem Stahlfilament besteht, welches einen Durchmesser in einem Bereich von 0,26 mm bis 0,35 mm aufweist und dass die Verstärkungslage eine Festigkeit von 22 kN/dm <X< 37 kN/dm aufweist.

12. Fahrzeugluftreifen nach einem der Ansprüche 9 bis 11, **dadurch gekennzeichnet, dass** der Festigkeitsträger der Gürtellage die Konstruktion 1x0,30 mm oder 2x0,30 mm aufweist und in einer Dichte in einem Bereich von 80 bis 120 epdm angeordnet ist, vorzugsweise der Festigkeitsträger der Konstruktion 1x0,30 mm in einer Dichte von 110 epdm in der Gürtellage angeordnet ist und dass deren Festigkeit von etwa 24 kN/dm beträgt oder dass der Festigkeitsträger der Konstruktion 2x0,30 mm in einer Dichte von 80 epdm in der Gürtellage angeordnet ist und dass deren Festigkeit etwa 35 kN/dm beträgt.

## Claims

1. Rubberized reinforcing ply (1) for articles consisting of an elastomeric material, preferably for vehicle tyres, wherein the reinforcing ply (1) has a strength of 10 kN/dm < x < 25 kN/dm and has a multiplicity of textile strengthening members (2) which are arranged parallel to and spaced apart from one another, wherein each textile strengthening member (2) is composed of at least one twisted multifilament yarn, and wherein the textile strengthening member (2) is not composed of the material rayon,
**characterized**
**in that** the reinforcing ply (1) satisfies the following condition:
(D² / E₀) in mm corresponds to a value in a range from 0.31 mm to 0.38 mm,
where D is the diameter of the textile strengthening member (2) in mm and lies in a range from 0.38 mm to 0.52 mm, and
where Eo = 100/epdm and the strength of the reinforcing ply means the breaking force of the reinforcing ply in kN per dm, which is calculated from the breaking force of the individual strengthening member multiplied by the number of strengthening members per dm of this reinforcing ply, with the breaking force being determined in accordance with ASTM D885M.

2. Reinforcing ply (1) according to Claim 1, **characterized in that** the strengthening member (2) has a diameter (D) in a range from 0.38 mm to 0.45 mm, preferably in a range from 0.42 mm to 0.45 mm.

3. Reinforcing ply (1) according to one or more of the preceding claims, **characterized in that** the reinforcing ply (1) has a strength of 11 kN/dm < x < 14 kN/dm.

4. Reinforcing ply (1) according to one or more of the preceding claims, **characterized in that** the strengthening member (2) is a cord (2) composed of two twisted-together multifilament yarns, and **in that** the strengthening members (2) are arranged in this reinforcing ply (1) in a density in a range from 150 epdm to 220 epdm, preferably in a range from 170 epdm to 180 epdm.

5. Reinforcing ply (1) according to one or more of the preceding claims, **characterized in that** the strengthening members (2) are composed of the material PET, PEN or of aliphatic polyamides, such as for example nylon PA66, PA46, PA6, or of aromatic polyamides, such as for example p-aramid, m-aramid, PBO, or of combinations of the aforementioned materials.

6. Reinforcing ply (1) according to one or more of the preceding claims, **characterized in that** the cord (2) has the construction 550dtex x2 with a diameter (D) of 0.45 mm, wherein both yarns are composed of PET and are arranged in this reinforcing ply (1) in a density of 175 epdm, and **in that** the reinforcing ply (1) has a strength of approximately 11.38 kN/dm.

7. Vehicle pneumatic tyre which has at least one reinforcing ply (1) according to one or more of the preceding claims.

8. Vehicle pneumatic tyre according to Claim 7, **characterized in that** the reinforcing ply (1) is a carcass and/or a belt bandage and/or a bead reinforcer.

9. Vehicle pneumatic tyre according to Claim 8, **characterized in that** it has, in addition to the reinforcing ply (1), a belt ply composed of rubberized strengthening members, which satisfies the following condition:
(D² / E₀) in mm corresponds to a value in a range from 0.07 mm to 0.43 mm, and **in that** the reinforcing ply has a strength of 16.5 kN/dm < X < 55 kN/dm, where D is the diameter of the strengthening member in mm, and where Eo = 100/epdm.

10. Vehicle pneumatic tyre according to Claim 9, **characterized in that** the sum of the strengths of the reinforcing ply (1) with textile strengthening members and of the belt ply is ≥ 40 kN/dm.

11. Vehicle pneumatic tyre according to Claim 9 or 10, **characterized in that** the strengthening member of the belt ply is composed of at least one steel filament which has a diameter in a range from 0.26 mm to 0.35 mm, and **in that** the reinforcing ply has a strength of 22 kN/dm < X < 37 kN/dm.

12. Vehicle pneumatic tyre according to one of Claims 9 to 11, **characterized in that** the strengthening member of the belt ply has the construction 1×0.30 mm or 2×0.30 mm and is arranged in a density in a range from 80 to 120 epdm, preferably the strengthening member of the construction 1×0.30 mm is arranged in the belt ply in a density of 110 epdm, and **in that** its strength is approximately 24 kN/dm, or **in that** the strengthening member of the construction 2×0.30 mm is arranged in the belt ply in a density of 80 epdm, and **in that** its strength is approximately 35 kN/dm.

## Revendications

1. Couche de renfort caoutchoutée (1) pour des objets composés d'un matériau élastomériques, de préférence pour des pneus de véhicules, la couche de renfort (1) présentant une résistance de 10 kN/dm < x < 25 kN/dm et une pluralité de supports de renforcement textiles (2) agencés parallèlement et à distance les uns des autres, chaque support de renforcement textile (2) étant constitué d'au moins un fil multifilament torsadé et le support de renforcement textile (2) n'étant pas constitué du matériau rayonne,
**caractérisée en ce que** la couche de renfort (1) satisfait à la condition suivante :
(D²/E₀) en mm correspond à une valeur dans une plage de 0,31 mm à 0,38 mm, D étant le diamètre du support de renforcement textile (2) en mm et se situant dans une plage de 0,38 mm à 0,52 mm et Eo = 100/epdm et la résistance de la couche de renfort signifiant la force de rupture de la couche de renfort en kN par dm qui est calculée à partir de la force de rupture du support de renforcement individuel multipliée par le nombre de supports de renforcement par dm de cette couche de renfort, la force de rupture étant déterminée selon la norme ASTM D885M.

2. Couche de renfort (1) selon la revendication 1, **caractérisée en ce que** le support de renforcement (2) présente un diamètre (D) dans une plage de 0,38 mm à 0,45 mm, préférablement dans une plage de 0,42 mm à 0,45 mm.

3. Couche de renfort (1) selon l'une ou plusieurs des revendications précédentes, **caractérisée en ce que** la couche de renfort (1) présente une résistance de 11 kN/dm < x < 14 kN/dm.

4. Couche de renfort (1) selon l'une ou plusieurs des revendications précédentes, **caractérisée en ce que** le support de renforcement (2) est un cordon (2) constitué de deux fils multifilaments torsadés l'un avec l'autre et **en ce que** les supports de renforcement (2) sont agencés en une densité dans une plage de 150 epdm à 220 epdm, de préférence dans une plage de 170 epdm à 180 epdm dans cette couche de renfort (1).

5. Couche de renfort (1) selon l'une ou plusieurs des revendications précédentes, **caractérisée en ce que** les supports de renforcement (2) sont constitués du matériau PET, PEN ou de polyamides aliphatiques, comme par exemple un Nylon PA 66, PA46, PA6 ou de polyamides aromatiques, comme par exemple un p-aramide, un m-aramide, PBO ou de combinaisons des matériaux mentionnés précédemment.

6. Couche de renfort (1) selon l'une ou plusieurs des revendications précédentes, **caractérisée en ce que** le cordon (2) présente la construction 550dtex x2 avec un diamètre (D) de 0,45 mm, les deux fils étant constitués de PET et étant agencés dans une densité de 175 epdm dans cette couche de renfort (1) et **en ce que** la couche de renfort (1) présente une résistance d'environ 11,38 kN/dm.

7. Pneumatique de véhicule qui présente au moins une couche de renfort (1) selon l'une ou plusieurs des revendications précédentes.

8. Pneumatique de véhicule selon la revendication 7, **caractérisé en ce que** la couche de renfort (1) est une carcasse et/ou une structure de ceinture et/ou un renfort d'appui.

9. Pneumatique de véhicule selon la revendication 8, **caractérisé en ce que** celui-ci présente en plus de la couche de renfort (1) une couche de ceinture composée de supports de renforcement caoutchoutés, qui satisfont à la condition suivante :
(D²/E₀) en mm correspond à une valeur dans une plage de 0,07 mm à 0,43 mm et **en ce que** la couche de renfort présente une résistance de 16,5 kN/dm < X < 55 kN/dm, D étant le diamètre du support de renforcement en mm et Eo = 100/epdm.

10. Pneumatique de véhicule selon la revendication 9, **caractérisé en ce que** la somme des résistances de la couche de renfort (1) comportant des supports de renforcement textiles et de la couche de ceinture étant ≥ 40 kN/dm.

11. Pneumatique de véhicule selon la revendication 9 ou 10, **caractérisé en ce que** le support de renforcement de la couche de ceinture est constitué d'au moins un filament d'acier qui présente un diamètre dans une plage de 0,26 mm à 0,35 mm et **en ce que** la couche de renfort présente une résistance de 22 kN/dm < X < 37 kN/dm.

12. Pneumatique de véhicule selon l'une quelconque des revendications 9 à 11, **caractérisé en ce que** le support de renforcement de la couche de ceinture présente la construction 1 x 0,30 mm ou 2 x 0,30 mm et est agencé dans une densité dans une plage de 80 à 120 epdm, de préférence le support de renforcement de la construction 1 x 0,30 mm est agencé dans une densité de 110 epdm dans la couche de ceinture et **en ce que** sa résistance est d'environ 24 kN/dm ou **en ce que** le support de renforcement de la construction 2 x 0,30 mm est agencé dans une densité de 80 epdm dans la couche de ceinture et **en ce que** sa résistance est d'environ 35 kN/dm.
